# EUROPEAN PATENT APPLICATION

(11) **EP 2 336 258 A2**
(43) Date of publication of application: **22.06.2011**
(21) Application number: 10195254.7
(22) Date of filing: 15.12.2010
(51) Int. Cl.: C09G 1/16, C08L 33/10, C08L 71/02

(54) **Floor polish compositions**

(30) Priority: 19.12.2009 US 284621 P
(71) Applicant: Rohm and Haas Company, Philadelphia, PA 19106-2399 (US); Dow Brasil Sudeste Industrial Ltda., Sao Paulo SP (BR)
(72) Inventor: Jorge, Alvin, 04718002, Sao Paolo (BR); Tysak, Theodore, Ambler, PA 19002 (US); Santos, Antonio Lucio, 11320050, Sao Vicente (BR)
(74) Representative: Buckley, Guy Julian

(57) **Abstract**

There is provided an aqueous polymer composition comprising
(a) a suspension or dispersion of one or more water-insoluble polymers having acid-functional residue, and
(b) one or more leveling agents having formula (I) 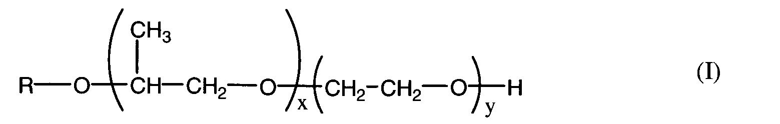 wherein x is a real number within a range of from 0.5 to 10; y is a real number within a range of from 2 to 20, and R represents a mixture of two or more linear alkyl moieties each containing one or more linear alkyl group with an even number of carbon atoms from 4 to 20.
Also provided is a floor polish containing such a composition and a method of coating a floor by applying such a floor polish.

## Description

### BACKGROUND:

Leveling is a key performance property characterizing floor polish. It is desired that, after a liquid floor polish composition is applied to a floor, the dried floor polish has a smooth, glossy surface, free of ridges, swirls, or other such marks. Such marks are normally made in the liquid composition by the string mop applicator or other tool used for applying the composition to the floor. To achieve this goal, a leveling agent is often included in the floor polish composition.

One common leveling agent is tris-butoxyethyl phosphate (TBEP), which is expensive and is difficult to incorporate into aqueous floor polish compositions. Excess amounts of TBEP may permanently plasticize the dried floor polish, which reduces wear resistance and allows increased soiling. TBEP sometimes increases the tendency of a floor polish to turn yellow. TBEP contains a phosphate group, and it is undesirable for such compounds to ultimately end up in the environment. Another commonly-used ingredient is dioctyl phthalate (DOP), which is a plasticizer that can possibly act as a leveling agent. Both DOP and TBEP are made from petroleum-based feedstocks.

US 4,460,734 describes a leveling agent that includes a synthetic polyalkoxylated linear aliphatic alcohol. Some of the aliphatic groups in the leveling agents described by US 4,460,734 have an odd number of carbon atoms, which demonstrates that the materials are made from petroleum-based feedstocks.

It is desired to provide leveling agents for floor polish compositions that provide good leveling performance while overcoming one or more of the disadvantages described herein above. For example, it is desired to provide leveling agents for floor polish compositions that provide good leveling performance and that are made entirely or partially from plant-based or other renewable feedstocks.

### STATEMENT OF THE INVENTION:

In a first aspect of the present invention, there is provided an aqueous polymer composition comprising
(a) a suspension or dispersion of one or more water-insoluble polymers having acid-functional residue, and
(b) one or more leveling agents having formula (I) 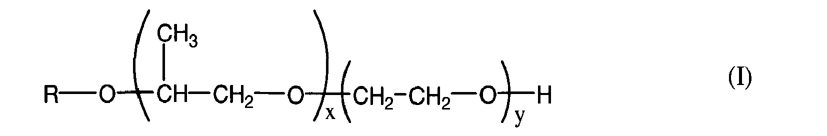
wherein x is a real number within a range of from 0.5 to 10; y is a real number within a range of from 2 to 20, and R represents a mixture of two or more linear alkyl moieties each containing one or more linear alkyl group with an even number of carbon atoms from 4 to 20.

In a second aspect of the present invention, there is provided an aqueous floor polish comprising such an aqueous composition.

In a third aspect of the present invention, there is provided a method of coating a floor by applying such a floor polish.

### DETAILED DESCRIPTION:

Each occurrence of a range in this application includes both endpoints that establish the range unless otherwise stated. In other words, a range of from 2 to 10 necessarily includes both 2 and 10 unless otherwise stated.

When the amount of a specific compound in a composition is described herein as "little or no" amount of that compound, it is meant that either none of that compound is present in that composition or, if any of that compound is present in that composition, the amount is 0.1% or less by weight of that compound based on the dry weight of the composition.

As used herein "(meth)acrylate" and "(meth)acrylic" mean, respectively, "acrylate or methacrylate" and "acrylic or methacrylic."

A "polymer," as used herein and as defined by FW Billmeyer, JR. in Textbook of Polymer Science, second edition, 1971, is a relatively large molecule made up of the reaction products of smaller chemical repeat units. Polymers may have structures that are linear, branched, star shaped, looped, hyperbranched, crosslinked, or a combination thereof; polymers may have a single type of repeat unit ("homopolymers") or they may have more than one type of repeat unit ("copolymers"). Copolymers may have the various types of repeat units arranged randomly, in sequence, in blocks, in other arrangements, or in any mixture or combination thereof.

Polymer molecular weights can be measured by standard methods such as, for example, size exclusion chromatography (SEC, also called gel permeation chromatography or GPC). Generally, polymers have weight-average molecular weight (Mw) of 1,000 or more. Polymers may have extremely high Mw; some polymers have Mw above 1,000,000; typical polymers have Mw of 1,000,000 or less. Some polymers are crosslinked, and crosslinked polymers are considered to have infinite Mw. Some polymers are characterized by Mn, the number-average molecular weight.

As used herein "weight of polymer" means the dry weight of polymer.

Molecules that can react with each other to form the repeat units of a polymer are known herein as "monomers." The repeat unit of a polymer that is formed from a monomer is known herein as the polymerized residue of that monomer.

As used herein, a material is "aqueous" if that material contains at least 25% water by weight, based on the total weight of that material.

As used herein, a "dispersion" contains, sometimes among other ingredients, discrete particles that are suspended in a continuous medium. When the continuous medium contains at least 50% water by weight, based on the weight of the continuous medium, the dispersion is said to be an "aqueous dispersion," and the continuous medium is said to be an "aqueous medium." When at least some of the suspended discrete particles in the dispersion contain one or more polymers, the dispersion is said herein to be a "polymer dispersion." Thus, an "aqueous polymer dispersion" contains some polymer-containing particles suspended in a continuous medium that is at least 50% water.

As used herein, "emulsion polymers" are polymers made by emulsion polymerization; such a polymer is also called a "latex."

As used herein, a "floor polish" is a liquid composition that is useful to form a coating on a floor.

The practice of the present invention involves the use of an aqueous polymer dispersion. The aqueous polymer dispersion may be made by any method. In some embodiments, one or more polymers are made by any means and then processed in a way that removes most non-polymeric compounds (such as, for example, solvents, carriers, polymerization media, etc.) and puts the one or more polymers in the form of particles; in such embodiments, the particles may then be dispersed in water. In some embodiments, a polymer is made by a method that creates the polymer in the form of an aqueous polymer dispersion; such methods include, for example, aqueous suspension polymerization and aqueous emulsion polymerization. Also suitable for some embodiments are naturally occurring aqueous polymer dispersions such as, for example, natural rubber latex.

The polymer composition of the present invention includes an aqueous dispersion of one or more water insoluble polymers. That is, the polymer particles remain as particles and do not become dissolved on a molecular level in water. The insoluble polymer particles may or may not swell when in contact with water. The polymer of the present invention also contains acid-functional residue. The water-insensitive, acid-functional polymer of the present invention is called herein "WIAF" polymer.

One important characteristic of a polymer is the glass transition temperature (Tg) as calculated by the Fox equation (T. G. Fox, Bull. Am. Phys. Soc. 1, 123 (1956)).

Some embodiments of the present invention make use of one or more WIAF polymers with Tg of -60°C to 150°C. In some embodiments, the polymer composition of the present invention contains at least one WIAF polymer with Tg from 0°C to 110°C. In some embodiments, the polymer composition of the present invention contains at least one WIAF polymer with Tg of at least 10°C, preferably at least 40°C, calculated using the Fox Equation.

The WIAF polymer contains acid functional residues. That is, there are acid-functional groups attached to the polymer. Suitable acid-functional groups include, for example, sulfonic acid groups, carboxyl groups, phosphoalkyl groups (i.e., groups with the structure -R⁵OP(=O)(OH)₂, where R⁵ is an alkyl group) and mixtures thereof. In some embodiments, carboxyl groups are present.

Acid-functional groups may become attached to the polymer in any way. In some embodiments, a polymer is made and then acid-functional groups are attached to the polymer by chemical reaction that takes place after the polymerization. In other embodiments, a monomer is used that has an acid-functional group, and the polymerization process leaves the acid-functional group intact.

The amount of acid-functional groups on a polymer is characterized by the percentage of the polymer weight that consists of polymerized monomer units to which an acid-functional group is attached. The weight of a polymerized monomer unit includes the acid-functional group, whether or not the acid-functional group was attached to the monomer prior to polymerization. For example, if a polymer is made from a monomer mixture that contains 5% by weight of acid-functional monomers, based on the weight of the mixture, that polymer is said to have 5% by weight acid-functional residues.

The WIAF polymer used in the polymer composition of the present invention may have any composition. In some embodiments, one or more WIAF polymer is used that is made by polymerization of vinyl monomers. Some suitable vinyl monomers include, for example, (meth)acrylic acid, other ethylenically unsaturated acids, alkyl (meth)acrylates in which the alkyl group has 1 to 20 carbon atoms, (meth)acrylamides, other (meth)acrylic monomers, and mixtures thereof. Also suitable are substituted acrylic monomers such as, for example, hydroxyalkyl (meth)acrylates, acetoacetoxyalkyl (meth)acrylates, phosphoalkyl (meth)acrylates, and mixtures thereof. Also suitable are, for example, vinyl aromatic monomers, vinyl acetate, allyl acetoacetate, (meth)acrylonitrile, and mixtures thereof. Mixtures of suitable monomers are also suitable.

Suitable vinyl aromatic monomer(s) include, for example, alpha, beta ethylenically unsaturated aromatic monomers, such as, for example, styrene, vinyl toluene, 2-bromo styrene, o-bromo styrene, p-chloro styrene, o-methoxy styrene, p-methoxy styrene, allyl phenyl ether, allyl tolyl ether, alpha-methyl styrene, and mixtures thereof. In some embodiments, styrene is used.

In some embodiments, no vinyl aromatic monomer is used. In embodiments in which vinyl aromatic is used, the amount may be any amount above zero. In some embodiments, the amount of residues of vinyl aromatic monomer in the polymer is, by weight based on the weight of the WIAF polymer, 10% or more. Independently, in some embodiments, the amount of residues of vinyl aromatic monomer in the polymer is, by weight based on the weight of the WIAF polymer, 70% or less, or 50% or less.

Suitable acidic monomer(s) include, for example, alpha, beta monoethylenically unsaturated acids, such as, for example, phosphoethyl methacrylate, maleic acid, fumaric acid aconitic acid, crotonic acid, citraconic acid, acryloxypropionic acid, acrylic acid, methacrylic acid, itaconic acid, and mixtures thereof. Acrylic acid and methacrylic acid and mixtures thereof are preferred. Methacrylic acid is the most preferred. Other suitable acid-functional monomers are, for example, partial esters of unsaturated aliphatic dicarboxylic acids and the alkyl half esters of such acids. For example, the alkyl half esters of itaconic acid, fumaric acid, and maleic acid, wherein the alkyl group contains 1 to 6 carbon atoms, such as methyl acid itaconate, butyl acid itaconate, ethyl acid fumarate, butyl acid fumarate, and methyl acid maleate.

In some embodiments, the amount of residues of acid-functional monomer in the WIAF polymer is, by weight based on the weight of the polymer, 1% or more; or 3% or more; or 5% or more. Independently, in some embodiments, the amount of residues of acid-functional monomer in the polymer is, by weight based on the weight of the WIAF polymer, 50% or less, or 20% or less.

Suitable alkyl (meth)acrylate monomers include, for example, methyl methacrylate, methyl acrylate, ethyl acrylate, ethyl methacrylate, n-butyl acrylate, butyl methacrylate, iso-butyl methacrylate, 2-ethyl hexyl acrylate, n-octyl acrylate, sec-butyl acrylate, cyclopropyl methacrylate, and mixtures thereof.

In some embodiments, the amount of residues of alkyl (meth)acrylate monomer in the polymer is, by weight based on the weight of the WIAF polymer, 10% or more; or 20% or more; or 30% or more. Independently, in some embodiments, the amount of residues of alkyl (meth)acrylate monomer in the WIAF polymer is, by weight based on the weight of the polymer, 97% or less, or 70% or less.

In some embodiments, the WIAF polymer contains polymerized residues of any combination of at least one vinyl aromatic monomer, at least one acidic monomer, and at least one (C₁-C₂₀) alkyl (meth)acrylate monomer.

In some embodiments, the WIAF polymer contains polymerized residues of one or more crosslinker monomer. A crosslinker monomer is a monomer that has two or more ethylenically unsaturated groups. Some suitable crosslinker monomers include, for example, divinyl aromatic monomers; di-, tri-, and tetra-(meth)acrylate esters; di-, tri-, and tetra-allyl ether or ester compounds; and allyl (meth)acrylate. In some embodiments, the amount of crosslinker monomer is zero. In some embodiments, the amount of crosslinker monomer is any amount above zero. Among embodiments in which the amount of crosslinker monomer is above zero, the amount of polymerized residues of crosslinker monomer is, by weight based on the weight of WIAF polymer, 0.3% or more; or 0.5% or more. Independently, among embodiments in which the amount of crosslinker monomer is above zero, the amount of polymerized residues of crosslinker monomer is, by weight based on the weight of WIAF polymer, 3.5% or less; or 3% or less; or 2.5% or less.

In some embodiments, the WIAF polymer contains polymerized residues of one or more amino monomer. Suitable amino monomers include primary, secondary, and tertiary amino-funtional monomers. Some suitable amino monomers are, for example, dimethylaminoethyl(meth)acrylate, t-butylaminoethyl(meth)acrylate, methylaminoethyl(meth)acrylate, and mixtures thereof. In some embodiments, the amount of amino monomer is zero. In other embodiments, the amount of polymerized residues of amino monomers is, by weight based on the weight of WIAF polymer, above zero to 20%. In some embodiments, the amount of polymerized residues of amino monomers is, by weight based on the weight of WIAF polymer, 5% or more.

The amount of WIAF polymer in the polymer composition of the present invention may be any amount above zero. In some embodiments, the amount of WIAF polymer is, by weight of WIAF polymer based on the total dry weight of the polymer composition, 20% or more; or 40% or more. Independently, in some embodiments, the amount of WIAF polymer is, by weight of WIAF polymer based on the total dry weight of the polymer composition, 90% or less; or 75% or less.

In some embodiments, the practice of the present invention involves the use of at least one polyvalent metal cation, which means herein a metal cation with charge of +2 or higher. Suitable polyvalent metal cations are, for example, polyvalent cations of alkaline earth metals and polyvalent cations of transition metals. Among the suitable metals whose polyvalent cations are suitable for use in the present invention are, for example, magnesium, arsenic, mercury, cobalt, iron, copper, lead, cadmium, nickel, chromium, aluminum, tungsten, tin, zinc, zirconium, and mixtures thereof. In some embodiments, one or more transition metal is used. In some embodiments, one or more of calcium, zinc, copper, magnesium, and mixtures thereof are used. In some embodiments, zinc is used. In some embodiments, magnesium is used. In some embodiments, calcium is used. In some embodiments, a blend of calcium and magnesium is used.

In some embodiments, at least one polyvalent metal ion is used in the form of a complex. Some suitable complexes include, for example, carbonates, bicarbonates, and glycinates. In some embodiments, it is useful to solubilize such a complex prior to adding it to an aqueous polymer dispersion. One method to solubilize such a complex is to add the complex to dilute aqueous ammonia; the result is named by inserting "ammonia" into the name of the original complex. For example, when cadmium glycinate is solubilized by addition to aqueous ammonia, the result is named "cadmium ammonia glycinate." Additional suitable solubilized complexes are, for example, zinc ammonia glycinate and zinc ammonia bicarbonate.

In some embodiments, the polyvalent metal cation, prior to its addition to the composition, is in the form of an insoluble metal compound. "Insoluble," as used herein, means a compound that has solubility in water of less than 4.2 g of compound in 100 g of water. Suitable insoluble metal compounds include, for example, oxides, hydroxides, carbonates, acetates, and mixtures thereof. One suitable insoluble metal compound is zinc oxide.

In some embodiments, no multivalent metal cation is used.

In some of the embodiments in which multivalent metal cation is used, the amount of equivalents of polyvalent metal cation may be 25% to 110% of the equivalents of the acid functional residues in the polymer. In some embodiments, the amount of equivalents of polyvalent metal ion is 30% or more of the equivalents of acid functional residues in the polymer, or 50% or more. Independently, in some embodiments, the amount of equivalents of polyvalent metal ion is 100% or less of the equivalents of acid functional residues in the polymer.

While the present invention is not limited to any theory, it is contemplated that, in the dried floor polish, the polyvalent metal ions interact with the acid-functional residues in a way that allows the dried floor polish to behave as if it is crosslinked. That is, it is contemplated that the presence of the polyvalent metal ions improves, for example, the toughness of the dried floor polish.

The polymer composition of the present invention contains one or more leveling agent. The leveling agent compositions of the present invention comprise at least one, preferably more than one, nonionic surfactant represented by Formula (I) 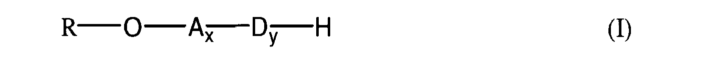 where each -A- is 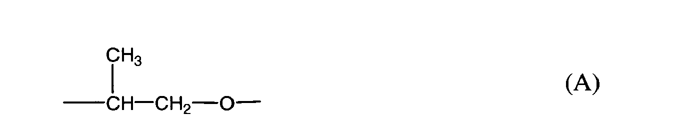 and each -D- is

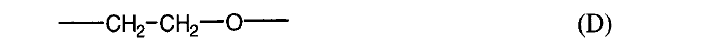

In Formula (I), each A moiety may also be called a poly(oxypropylene) or PO moiety and each D moiety may also be called a poly(oxyethylene) or EO moiety. The A and D moieties may be arranged as two blocks as shown in Formula (I). In some embodiments the A and D moieties may have another arrangement such as, for example, blocks with D adjacent to R-O-, multiple blocks, random distribution, or alternation. In Formula (I), x is a real number within a range of from 0.5 to 10, and y is a real number within a range of from 2 to 20. Also in Formula (I), R represents a mixture of two or more linear alkyl moieties each containing one or more linear alkyl group with an even number of carbon atoms from 4 to 20.

The surfactants of the present invention, sometimes generically referred to as alkoxylates, are preferably prepared in a sequential manner that includes propoxylation (adding PO or poly(oxypropylene)) moieties of an alcohol or mixture of alcohols to form a PO block followed by ethoxylation (adding EO or poly(oxyethylene)) moieties to form an EO block attached to the PO block, but spaced apart from R which represents alkyl moieties from the alcohol or mixture of alcohols. One may either begin with a mixture of alcohols that provides a distribution of alkyl moieties and then sequentially propoxlylate and ethoxylate the mixture or separately propoxylate and ethoxylate select alcohols and then combine such alkoxylates (propoxylated and ethoxylated alcohols) in proportions sufficient to provide a distribution, for example, as shown in Table 1 below.

Preferably, R represents a mixture of linear alkyl moieties that are the alkyl portions of seed oil-derived alcohols. In some embodiments, R has an alkyl moiety distribution as in Table 1:

**Table 1**

| Amount | Alkyl Moieties |
|---|---|
| 0 wt% to 40 wt% | C₆ |
| 20 wt%-40 wt% | C₈ |
| 20 wt%-45 wt% | C₁₀ |
| 10 wt%-45 wt% | C₁₂ |
| 0 wt% to 40 wt% | C₁₄ |
| 0 wt% to 15 wt% | C₁₆₋₁₈ |

As used herein, "C₁₆₋₁₈" means "C₁₆, C₁₈, or a mixture thereof."

Any one or more of C₆, C₁₄, and C₁₆₋₁₈ alkyl moieties may, but need not be, present in leveling agents of the present invention. When present, the amounts of C₆, C₁₄, and C₁₆₋₁₈ alkyl moieties may satisfy any of their respective ranges as shown in Table 1 as long as all weight percentages total 100 wt%. In some embodiments, one or more of C₆, C₁₄, and C₁₆₋₁₈ alkyl moieties are present in an amount greater than zero. In some embodiments, C₆ and C₁₄ are each present in an amount greater than zero, and there is also an amount greater than zero of C₁₆₋₁₈.

In some embodiments, R has an alkyl moiety distribution as in Table 2.

**Table 2**

| Amount | Alkyl Moieties |
|---|---|
| 0 wt% to 36 wt% | C₆ |
| 22 wt%-40 wt% | C₈ |
| 27 wt%-44 wt% | C₁₀ |
| 14 wt%-35 wt% | C₁₂ |
| 5 wt% to 13 wt% | C₁₄ |
| 0 wt% to 5 wt% | C₁₆₋₁₈ |

The surfactant mixture as in Table 2 must include a mixture of at least four alkyl moieties: C₈, C₁₀, C_{12,} and C₁₄. Any one or more of C₆ and C₁₆₋₁₈ alkyl moieties may, but need not be, present in surfactant compositions of this preferred subset of the present invention. When present, the amounts of C₆, and C₁₆₋₁₈ alkyl moieties may satisfy any of their respective ranges as shown in Table 1 as long as all weight percentages total 100 wt%.

In some embodiments, the amount of C₆ in R is zero. Independently, in some embodiments, the amount of C₁₆₋₁₈ in R is not zero.

Formula (I) above includes variables "x" and "y" that, taken together, establish a degree of alkoxylation in an oligomer distribution. Individually, "x" and "y" represent average degrees of, respectively, propoxylation and ethoxylation. In some embodiments, the degree of propoxylation or "x" falls within a range of from 0.5 to 7, preferably within a range of 0.5 to less than 4, more preferably within a range of from 0.5 to 3, still more preferably within a range of from 2 to 3, and even more preferably within a range of from 2.5 to 3. The degree of ethoxylation or "y" preferably falls within a range of from 2 to 10, more preferably within a range of from 2 to 8, still more preferably within a range of from 4 to 8 and even more preferably within a range of from 6 to 8.

In some embodiments, the sum of x and y is 1 to 15. In some embodiments, the sum of x and y is 1 to 7.

Independently, in some embodiments, y is greater than x. In some embodiments, y is greater than or equal to 2 times x.

In some embodiments, x is within a range of from 2.5 to 3, y is within a range of from 2 to 10, and R has an alkyl moiety distribution as in Table 2.

In some embodiments, the amount of C₆ in R is zero, the amount of C₁₆₋₁₈ in R is not zero, and the sum of x and y is 1 to 7.

The amount of the leveling agent of the present invention may be any amount above zero. In some embodiments, the amount of leveling agent, by weight based on the dry weight of the polymer composition of the present invention, is 1% or more; or 2% or more; or 5% or more. Independently, in some embodiments, the amount of leveling agent, by weight based on the dry weight of the composition of the present invention, is 15% or less; or 10% or less.

Independently, in some embodiments, the composition of the present invention contains little or no compound that contains any phthalate group.

Independently, in some embodiments, the composition of the present invention contains little or no compound having structure (II). Compounds having structure (II) are defined herein as compounds that do not fall within the definition of structure (I) and that are further defined as follows:

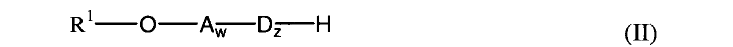

In structure (II), R¹ is an alkyl group having an odd number of carbon atoms; A and D are defined as in structure (I); w is a real number from 0 to 10; and z is a real number from 1 to 20. In some embodiments, the composition of the present invention contains no compound having structure (II).

In some embodiments, the composition of the present invention is used in making a floor polish of the present invention. A floor polish of the present invention contains, in addition to the above-described polymer composition of the present invention, one or more additional ingredients, known herein as "adjuvants." Adjuvants, when present, include, for example, waxes (including, for example, polyolefin waxes such as, for example, polyethylene wax emulsions and polypropylene wax emulsions; and natural waxes such as carnauba), coalescents, surfactants, wetting agents, emulsifying agents, dispersing agents, cosolvents, thickeners (including, for example, alkali swellable resins and alkali soluble resins), preservatives, perfumes, and mixtures thereof. Adjuvants, when present, may be added at any point in the formation of the composition of the present invention. Some adjuvants, for example, may be added as part of the process of forming the aqueous polymer dispersion and will remain in the composition. Some adjuvants, for example, may be added to one or more of the ingredients or to one or more of the admixtures, to improve the properties of the composition. Some of these adjuvants may reside in any one of or any combination of the following locations: inside the suspended particles of the aqueous polymer dispersion, on the surface of the suspended particles of the aqueous polymer dispersion, or in the continuous medium.

A floor polish of the present invention may be made by combining the ingredients in any order, as long as the floor polish, when completed, contains all the ingredients of the above-described polymer composition. For example, a floor polish is considered herein to be a floor polish of the present invention if it contains one or more adjuvant, one or more polymer (a), and one or more levelling agent (b), whether or not (a) and (b) were combined with each other prior to addition of adjuvent.

If multivalent cation is present in a floor polish of the present invention, it may be may mixed with (a) and (b) prior to, simultaneously with, or subsequent to, mixing with further adjuvant.

The floor polish of the present invention may or may not contain pigment. In some embodiments, the floor polish of the present invention contains no pigment. Pigments are inorganic substances in the form of powder. Pigment particles normally have median particle size of 10 micrometer or less.

In some embodiments, the floor polish of the present invention contains little or no leveling agent other than the leveling agent having structure (I). In other embodiments, the floor polish of the present invention contains one or more leveling agent that does not have structure (I) in addition to one or more leveling agent that has structure (I).

In a floor polish of the present invention, the amount of polymer (a), by dry weight of polymer (a) based on the total weight of the floor polish, 8% or more, or 10% or more, or 12% or more. Independently, in a floor polish of the present invention, the amount of polymer (a), by dry weight of polymer (a) based on the total weight of the floor polish, 25% or less, or 20% or less; or 18% or less, or 16% or less.

In some embodiments, the floor polish of the present invention contains little or no leveling agent that contains any phosphate group. In some embodiments, the floor polish of the present invention contains no leveling agent that contains any phosphate group.

In some embodiments, the floor polish of the present invention contains little or no compound that contains any phosphate group. In some embodiments, the floor polish of the present invention contains no compound that contains any phosphate group.

In some embodiments, a floor polish of the present invention is detergent resistant and removable. "Removability" means that the coating, after it is dried and has undergone cure reactions (if any), may be removed by contact with an aqueous solution of acetic acid (or a comparably weak acid) or with an aqueous solution of amonia (or an amine). The characteristics of detergent resistance and removability may be introduced into the floor polish by any method consistent with the definition of the present invention described herein.

For example, the floor polish may include one or more multivalent metal ion. The dried coating may then be removed by contact with an aqueous solution of ammonia or of an amine.

For another example, the floor polish may contain polymer that contains polymerized residues of amino monomers. The dried coating may then be removed by contact with an aqueous solution of acetic acid (or a comparably weak acid).

It is to be understood that for purposes of the present specification and claims that each operation disclosed herein is performed at 25°C unless otherwise specified.

### EXAMPLES

The following Examples, the following materials were used. "Activity" means the concentration of the Material in the form in which it is supplied.

| **Name** | **Material** | **Activity** | **Description** |
|---|---|---|---|
| F.S. | FluoroSurfactant | 1 % | Zonyl^{™} FSJ wetting agent, from DuPont |
| DE | Dowanol^{™} DE solvent | 100% | Diethylene Glycol Monoethyl Ether, from Dow Chemical Co. -- coalescent |
| DPM | Dowanol^{™} DPM solvent | 100% | Dipropylene glycol monomethyl ether, from Dow Chemical Co. -- coalescent |
| TBEP | tris-butoxyethyl phosphate | 100% | commodity -- leveling agent |
| P1 | Floor Polish Polymer | 38% | note (1) |
| fumaric | Alkali Soluble Fumaric | 30% | Meghacryl^{™} EAS 401 alkali soluble resin, from Megh Industria e Comercia Ltda, Brazil |
| SA4 | Ecosurf^{™} SA4 surfactant | 100% | Leveling agent having structure (I), from Dow Chemical Co. |
| SA7 | Ecosurf^{™} SA7 surfactant | 100% | Leveling agent having structure (I), from Dow Chemical Co. |
| PE wax | polyethylene wax emulsion | 35% | EPE 350, from Megh Industria e Comercia Ltda, Brazil |

| | | | |
|---|---|---|---|
| note (1): emulsion-polymerized resin made of (parts by weight) 35 n-butyl acrylate / 9 methyl methacrylate / 40 styrene / 16 methacrylic acid, with 2.5 parts Zn(+2) and 0.7 parts K(+1). The resin, including the zinc and potassium, was prepared as described in US 4,517,330. | | | |

### Example 1: Formulation of Sample Floor Polishes

Sample floor polishes were made by adding ingredients in the following order: water, preservative (if used), wetting agent, coalescent (if used) and solvent, plasticizers (if used), dispersions (including dispersed polymers) and resins, alkali soluble resins, and polyolefin dispersions. Formulations were made as shown in the following table. Amounts shown are parts by weight of the material as supplied. Samples with "C" in the sample number are comparative samples.

**Table 3: Sample Formulations (parts by weight)**

| **Ingredient** | **Sample 1-C** | **Sample 2** | **Sample 3-C** | **Sample 4** | **Sample 5** |
|---|---|---|---|---|---|
| F.S. | 1 | 1 | 1 | 1 | 1 |
| DE | 2 | 2 | 0 | 0 | 0 |
| DPM | 0 | 0 | 2 | 2 | 2 |
| TBEP | 1 | 0 | 1 | 0 | 0 |
| P1 | 21 | 21 | 21 | 21 | 21 |
| fumaric | 2 | 2 | 2 | 2 | 1 |
| SA4 | 0 | 1 | 0 | 1 | 0 |
| SA7 | 0 | 0 | 0 | 0 | 2 |
| PE wax | 3 | 3 | 3 | 3 | 3 |
| water | 70 | 70 | 70 | 70 | 70 |

### Example 2: Application to Tile

After the ingredients were mixed, the formulations stood overnight. Each formulation was applied to tiles as follows. Tile was cleaned by hand with ethanol and paper. The surface of the tile was divided into two equal parts, side by side. Formulation was applied by hand with a cotton ball. 2 milliliters of formulation was applied to each half-tile, paying attention to cover the entire surface of the half-tile. Tile was allowed to dry and form a film for at least 1 hour at 25°C and 60% air moisture.

For gloss measurement, formulations were applied to black polyvinyl chloride tiles. The gloss was measured at 60-degree angle; ten measurements were made and averaged.

The entire process of application and measurement was repeated for a total of 5 layers.

To measure yellowness, 5 layers were applied as described above to white polyvinyl chloride tile, the tile was stored for 30 days, and then the coating was assessed visually. A rating scale was used to record the yellowness: white appearance was "1" and fully yellow appearance was "5." Ten people rated the coatings and the average was made.

Results were as follows:

**Table 4: Results of Testing**

| | **Sample 1-C** | **Sample 2** | **Sample 3-C** | **Sample 4** | **Sample 5** |
|---|---|---|---|---|---|
| **Gloss, Layer 1** | 20.3 | 23.8 | 18.7 | 23.5 | 25.7 |
| **Gloss, Layer 2** | 36.3 | 33.5 | 29.9 | 33.4 | 25.3 |
| **Gloss, Layer 3** | 40.5 | 45.4 | 30.0 | 41.1 | 39.8 |
| **Gloss, Layer 4** | 49.6 | 48.3 | 42.1 | 50.9 | 46.5 |
| **Gloss, Layer 5** | 53.4 | 52.3 | 46.3 | 56.8 | 45.7 |
| | | | | | |
| **Yellowness (1 white, 5 yellow)** | 4 | 2 | 3 | 2 | 2 |

The inventive floor polishes showed better gloss and yellowing than the comparative samples. Gloss is considered to depend on the smoothness of the dried coating; thus gloss is considered to be a measure of the effectiveness of the leveling effect of the leveling agent.

## Claims

**1.** An aqueous polymer composition comprising
(a) a suspension or dispersion of one or more water-insoluble polymers having acid-functional residue, and
(b) one or more leveling agents having formula (I) 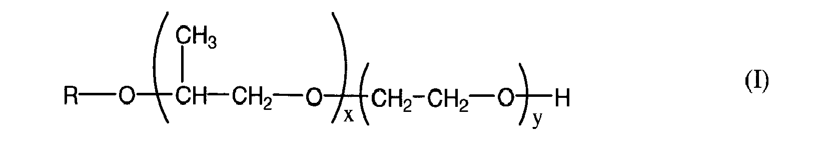 wherein x is a real number within a range of from 0.5 to 10; y is a real number within a range of from 2 to 20, and R represents a mixture of two or more linear alkyl moieties each containing one or more linear alkyl group with an even number of carbon atoms from 4 to 20.

**2.** The composition of claim 1, wherein said x is a real number within a range of from 0.5 to less than 4, said y is a real number within a range of from 2 to 10, and said R is a mixture of seed-oil based linear alkyl moieties with an alkyl moiety distribution as follows, wherein each wt% is based upon the weight of all alkyl moieties present in the distribution, and all wt% for each distribution total 100 wt%:
(i) 0 wt% to 40 wt% C₆ alkyl moieties,
(ii) 20 wt%-40 wt% C₈ alkyl moieties,
(iii) 20 wt%-45 wt% C₁₀ alkyl moieties,
(iv) 10 wt%-45 wt% C₁₂ alkyl moieties.
(v) 0 wt% to 40 wt% C₁₄ alkyl moieties, and
(vi) 0 wt% to 15 wt% C₁₆ alkyl moieties, C₁₈ alkyl moieties, or a mixture thereof.

**3.** The composition of claim 2, wherein the amount of one or more of said (i), said (v), and said (vi) is greater than zero.

**4.** The composition of Claim 1 wherein said x is a real number less than or equal to 3.

**5.** The composition of claim 1, wherein said y is greater than or equal to 2 times said x.

**6.** The composition of claim 1, wherein said x is from 2.5 to 3, and wherein said alkyl moiety distribution is as follows:
(i) 0 wt%-36 wt% C₆ alkyl moieties,
(ii) 22 wt%-40 wt% C₈ alkyl moieties,
(iii) 27 wt%-44 wt% C₁₀ alkyl moieties,
(iv) 14 wt%-35 wt% C₁₂ alkyl moieties,
(v) 5 wt%-13 wt% C₁₄ alkyl moieties, and
(vi) 0 wt%-5 wt% C₁₆ alkyl moieties, C₁₈ alkyl moieties, or a mixture thereof.

**7.** The composition of claim 1, further comprising one or more multivalent metal cation.

**8.** A floor polish comprising the composition of claim 1 and further comprising one or more adjuvant selected from the group consisting of waxes, coalescents, surfactants, wetting agents, emulsifying agents, dispersing agents, cosolvents, thickeners, preservatives, perfumes, and mixtures thereof.

**10.** A method of coating a floor comprising applying a layer of the composition of claim 1 to a floor.
